Europäisches Patentamt

European Patent Office

Office européen des brevets

(19)

(11) Publication number: **0 053 137**
B1

(12) EUROPEAN PATENT SPECIFICATION

(45) Date of publication of patent specification: **16.01.85**

(51) Int. Cl.⁴: **B 66 D 3/04, B 65 G 7/12**

(21) Application number: **81901484.6**

(22) Date of filing: **02.06.81**

(86) International application number:
**PCT/SE81/00158**

(87) International publication number:
**WO 81/03481 10.12.81 Gazette 81/29**

(54) BLOCK FOR TRANSPORT LINES.

(30) Priority: **05.06.80 SE 8004187**

(43) Date of publication of application:
**09.06.82 Bulletin 82/23**

(45) Publication of the grant of the patent:
**16.01.85 Bulletin 85/03**

(84) Designated Contracting States:
**AT CH DE FR GB LI NL**

(56) References cited:
**NO-B- 141 550**
**US-A-2 821 937**
**US-A-3 207 477**

(73) Proprietor: **BOGREN, Leif**
**Rädavägen 59**
**S-431 36 Mölndal (SE)**

(72) Inventor: **BOGREN, Leif**
**Rädavägen 59**
**S-431 36 Mölndal (SE)**

(74) Representative: **Roth, Ernst Adolf Michael et al**
**GÖTEBORGS PATENTBYRA AB Box 5005**
**S-402 21 Göteborg (SE)**

Courier Press, Leamington Spa, England.

## Description

The present invention refers to a block for a temporary transport line for the removal e.g. of cut logs incorporating a frame with two pulleys arranged at a distance from each other, intended for supporting and/or forming an angular deviation of a flexible traction means such as a band, rope or the like provided with straps or the like protruding from the flexible traction means, the frame substantially enclosing the flexible traction means with the exception of a slit, a safety device partly covering the slit and preventing the flexible traction means from disengaging from the pulleys and making it possible for the straps to pass the block, and a suspending member for the frame.

Background of the Invention

During transport e.g. of timber logs by means of a haulage system (e.g. of the type described in the Swedish patent No. 7808923-2) it often occurs during forest clearing that restrictions of varying kinds and also the ground itself prevents the extension of the transport line along a straight line. Such obstacles can be residual stands, large rocks, meres, lakes etc., which make it necessary to be able to angle the transport line. At long transport distances it may even be necessary to support the rope at regular intervals in order to prevent its hanging from being too great. A problem with existing haulage systems, that work with automatic unloading at predetermined points, is that the carrier and the load strap, in which the load hangs, must be able to be moved past the blocks, without being caught in them or releasing their load.

From US—A—2 821 937 it is known a block of the above mentioned kind. This arrangement however does not guarantee a free passage of the carrier and load strap through the block, especially if the load is not hanging vertically but is dragged along the ground, as the case is with timber logs. The load strap in this case forms an acute angle with the transport rope and has a tendency to follow the rope inside the support rolls, with the result that the load will press against the block and cause a dead stop. The block thereby will be connected to the rope, which at its continued motion will swing the block in the direction of movement. At best the rope jumps out of the block, but if this does not happen, there will be a complete breakdown of the entire transport system. When the rope is angled, the block will take up an inclined or even a horizontal position, for which the block is not designed and there is a large risk that the rope can then loose its grip around the rolls and slip off the block. This known block is furthermore quite useless for transport ropes consisting of a soft textile band, which has an even greater tendency to slide off cylindrical rolls.

Permanent transport arrangements such as ski lifts (Norwegian published patent application 141.550) are equipped with large rope wheels for supporting the wire and the load. The rope wheels are supported in big yokes with a limited angular adjustability in one plane. These rope wheels in practice can take up almost no lateral angling at all, and can neither be used in horizontal position, i.e. with the pivots of the rope wheels positioned vertically, which position the block will assume as soon as lateral angling occurs.

The Purpose of the Invention

The purpose of the present invention is to provide a block, especially for reciprocating transport ropes, which even when the rope makes a sharp-angled deviation guarantees that the transport line with its carrier and load strap easily can pass through it even when the load is dragged along the ground. The block should furthermore work as well when hanging vertically as when inclined or horizontal, without the transport rope being thrown off during its reciprocating motion. It should furthermore be insignificant whether the rope is pulled in both directions through the block or whether it moves in one direction only. Another purpose of the invention is to provide a block that can withstand very rough treatment in surroundings where both sand and gravel as well as snow and ice formation can occur. These object have been solved thereby that the suspending member is rotatable on one hand relative to the frame about an axis parallel to the pivots of the pulleys and on the other hand with the frame about an axis perpendicular to the pivots and to the longitudinal direction of the frame, in that the slit is arranged laterally of the pulley and closely adjacent to the region of the circumference of the pulleys and in that the safety device is composed of at least one locking device rotatable about a pivot, which in its normal position is arranged to prevent the flexible traction means from leaving the frame through the slit and when moved out of said normal position by engagement with a strap provides a free passage for the strap.

Description of Drawings

Fig. 1 shows a perspective view of the block according to the invention adapted as an angling block,

Fig. 2 shows the block according to fig. 1 in a front view,

Fig. 3 is a cross section along line III—III in fig. 2,

Fig. 4 is a modified embodiment of the block according to the invention in a front view,

Fig. 5 shows in enlarged scale a cross section along line V—V in fig. 4,

Fig. 6 shows a front view of an embodiment of the block shown in fig. 4 and 5,

Fig. 7 is a section along line VII—VII in fig. 6, and

Fig. 8 and 9 show a fourth embodiment of a block according to the invention in side view and front view.

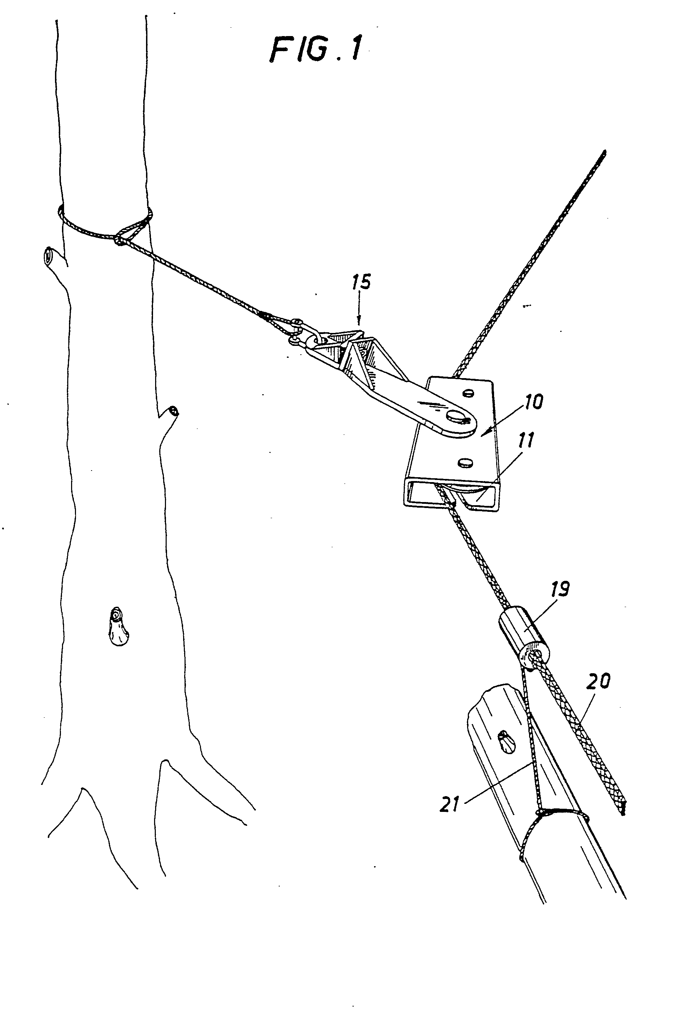

The block according to figs. 1—3 consists of a tube-formed frame 11 of rectangular cross section. Two pulleys 12 are arranged in the frame and in level with the upper part of the pulleys there is arranged a slit 13 extending in the longitudinal direction of the frame and along its entire length. A two-piece lever 15 is rotatably journaled about a shaft 16 just between the pivots 14 of the two pulleys 12 and at the flat side of the frame turned away from the slit 13. The lever 15 is at its upper free end equipped with an opening 17 for suspending the block, for example from a tree, as shown in fig. 1. The lever 15 consists of two parts 15a and 15b, between which is arranged a journal 18 extending in the longitudinal direction of the lever and permitting the frame to rotate relative to the fastening. Because of the rotatable suspension of the frame this can be compared to a bogie, which can assume that most suitable position depending on the pulling forces occuring in the transport rope.

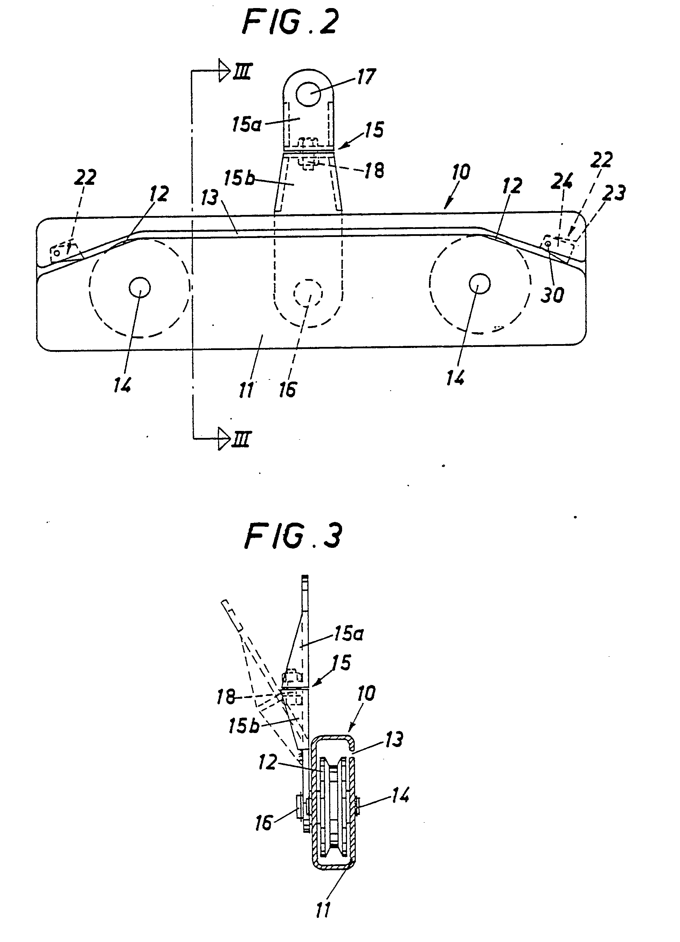

The slit 13 is blocked by two locking devices 22, which, in accordance with fig. 2, each consists of a catch 24 pivotably arranged around an axis 30 and being acted upon by a spring 23.

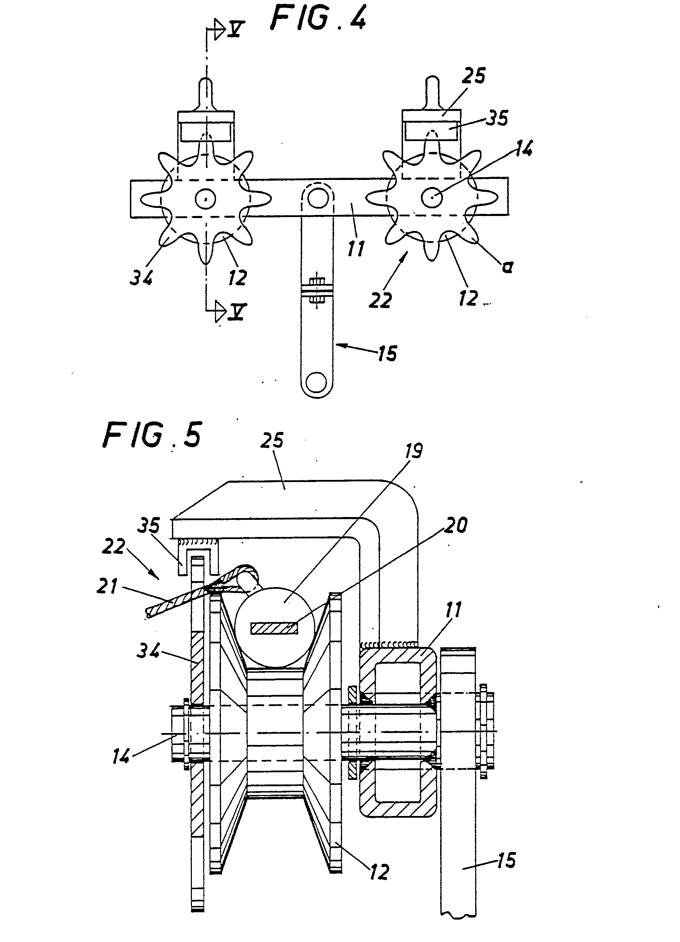

The block according to the invention works in the following manner. When a load, e.g. a log, which at one of its ends via a strap and carrier hangs from a transport rope 20 and with its other end is dragged on the ground, approaches one of the blocks, the bogie will pivot in the direction of the load, at one hand around the shaft 16 and if necessary also around the journal 18, to allow the frame 11 to position itself substantially in the direction of the rope, i.e. the direction of force, whereby the entry of the carrier 19 into the frame is considerably facilitated. The load strap 21 passes through the slit 13 and thereby swings away the catch 24 against the action of spring 23. When the carrier 19 has passed the suspending lever 15 the bogie will tilt over to the opposite side and assume a position in the direction of the extension of the load-carrying rope leaving the block, whereby the exit of the carrier from the housing is facilitated. Simultaneously with its tilting movement the bogie can make a pivoting motion about the journal 18, which is especially important if the rope has an angular deviation. At the embodiment according to fig. 4 and 5 the locking device 22 consists of a gear wheel 34 having large teeth, and which is freely rotatable on the same pivot 14 on which the pulley 12 of the block is supported. The diameter of the gear wheel 34 is somewhat bigger than that of the pulley 12, whereas the diameter of the root of the tooth is preferably somewhat smaller than the diameter of the pulley. At least one of the tooth tips is always within a rail 35, which is supported by a yoke 25, fixed to the frame 11 of the block, which in the embodiment shown consists of a rectangular steel tube.

When a carrier 19 fixed on the rope 20 enters the block, a strap 21 which is fixed to the carrier 19 will hit against one tooth of the gear wheel 34, whereby this will rotate enough to let the strap pass through the locking device 22. During the strap's 21 passage through the block at least one of the teeth of the gear wheel 34 will always be in engagement with the rail 35, which means that there at no time during the passage of the strap through the block will be any exposed opening through which the rope 20 can leave the block.

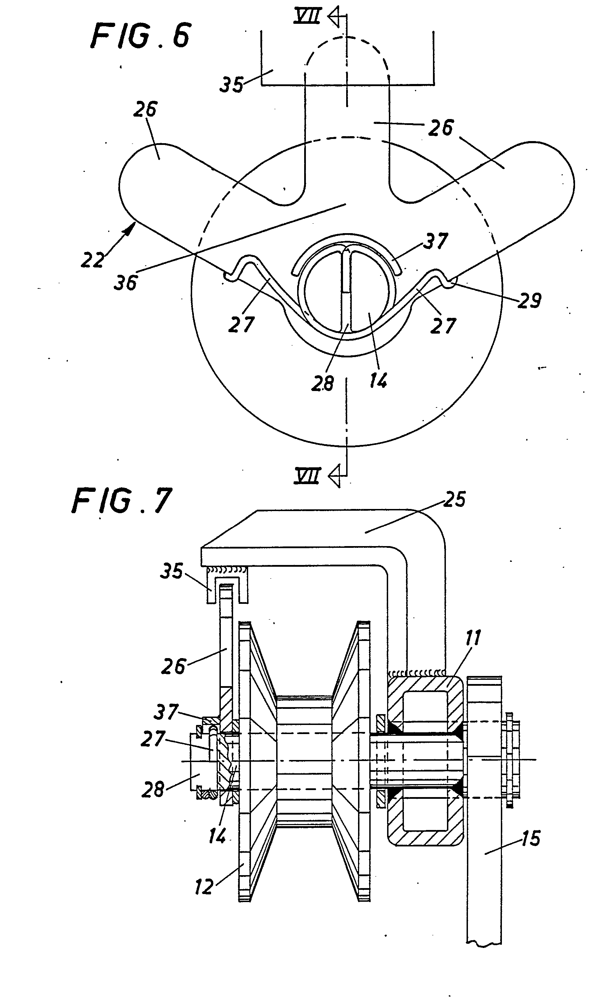

With the embodiment according to fig. 6 and 7 the gear wheel is replaced by a catch 36 pivotable about the pivot 14 and comprising three fingers 26, which by two separate springs 27 are held in such position that the intermediary finger when unactuated is in engagement with the rail 35. The springs 27 are with one end each fitted in a groove 28 in the end of the pivot, whereas their opposite ends are provided with a hook 29 each arranged around the edges of the outer fingers 26. A stop 37 is fitted to the catch for limiting the movement of the spring 27. The fingers 26 are so arranged relative to each other, that the strap 21 normally will cooperate only with the intermediary finger whereas the two side fingers during the pivoting motion in either direction temporarily will block the slit between the pulleys 12 and the yoke 25. When the strap has passed the pulley in question the catch 36 will return by spring action to its initial position.

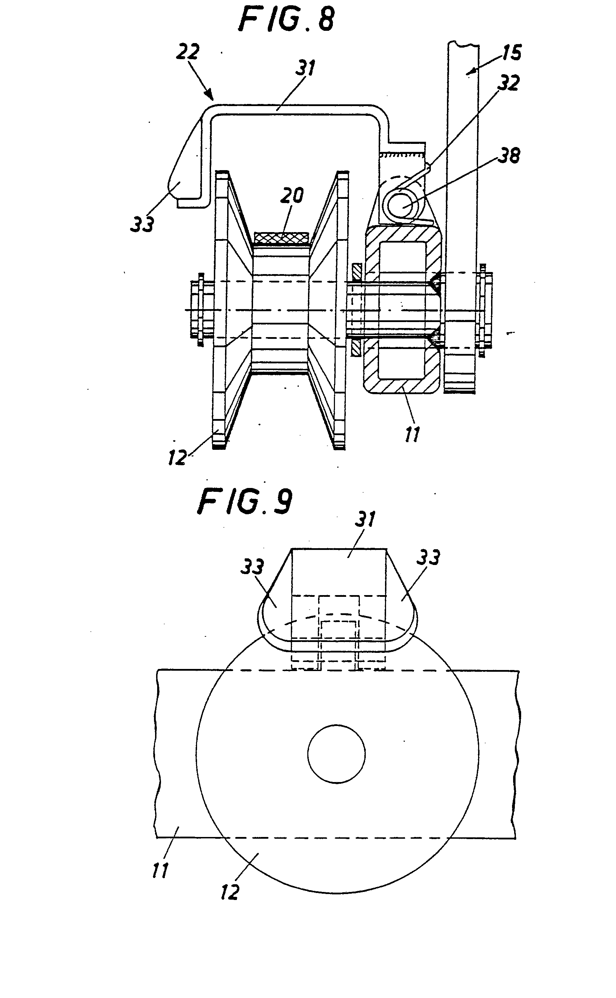

The embodiment according to figs. 8 and 9 differs from the previous in that the locking device 22 consists of a yoke 31 rotatably arranged around a pivot pin 38. The pivot pin 38 is supported in attachments arranged at the frame 11 and the yoke 31 encloses the pulley 12 thus that a closed space is formed, wherein the rope 20 is placed. The yoke 31 can be pivoted in the direction away from the pulley 12 against the action of a spring 32 and the free front end of the yoke, which is positioned in front of the pulley is provided with skewed guide flanges 33.

When a strap 21 on the rope 20 shall pass through the block the strap will push against the guide flanges 33 of the yoke 31 and press the yoke in a direction away from the pulley 12 so that the strap can pass. Since the block is equipped with two pulleys with associated locking devices and the strap only actuates one pulley at a time there is always one locking device ready to prevent the line from leaving the block.

Also a number of variations are possible. Thus the frame need not be tube-formed, but could have another shape, but what is important is that the pulleys 12 of the block are positioned at such a distance from each other and from the shaft 16 of the suspending lever 15 that the bogie can make pivoting movements relative to the lever 15. It is also important that the load strap 21 is given possibility to pass through the block without obstructions, which has here been achieved with the aid of the slit 13, that need not necessarily be a slit in a tube but can instead be other limiting means e.g. a guide rail. It is also important in this connection that the rope cannot leave the frame even if the block should assume a horizontal position, which is the case if the angular deviation is relatively sharp. With the block according to the invention angles of 0—180° can be mastered.

## Claims

1. A block (10) for a temporary transport line for removal e.g. of cut logs, incorporating a frame (11) with two pulleys (12) arranged at a distance from each other, intended for supporting and/or forming an angular deviation of a flexible traction means (20) such as a band, rope or the like provided with straps (21) or the like protruding from the flexible traction means, the frame substantially enclosing the flexible traction means with the exception of a slit (13), a safety device partly covering the slit and preventing the flexible traction means from disengaging from the pulleys and making it possible for the straps to pass the block, and a suspending member (15) for the frame, characterised in, that the suspending member (15) is rotatable on one hand relative to the frame (11) about an axis (16) parallel to the pivots (14) of the pulleys (12) and on the other hand with the frame (11) about an axis (18) perpendicular to the pivots (14) and to the longitudinal direction of the frame (11), in that the slit is arranged laterally of the pulley and closely adjacent to the region of the circumference of the pulleys and in that the safety device is composed of at least one locking device (22) rotatable about a pivot (30, 14, 38), which in its normal position is arranged to prevent the flexible traction means from leaving the frame through the slit and when moved out of said normal position by engagement with a strap (21) provides a free passage for the strap.

2. A block according to claim 1, characterized in, that the frame (11) is tube-formed and the slit (13) is extending in the longitudinal direction thereof.

3. A block according to claim 2, characterized in, that the slit (13) along at least part of its length is angled.

4. A block according to claims 1, characterized in, that the locking device (22) consists of a catch (24, 36, 31), which is acted upon by at least one spring (23, 27, 32).

## Patentansprüche

1. Block für eine temporäre Transportbahn zum Beseitigen von beispielsweise gefällten Bäumen und bestehend aus zwei auf Abstand von einander vorgesehenen in einem Blockgehäuse angeordneten Scheiben (12) zum Tragen und/oder zur Umformung des Abbiegungswinkels einer flexiblen Zugvorrichtung (20) wie z.B. ein Band, Seil oder dergleichen, das mit einem Stropp (21) od. dgl. versehen ist, der von der flexiblen Zugvorrichtung absteht, und welches Blockgehäuse die flexible Zugvorrichtung mit Ausnahme eines Schlitzes (13) im wesentlichen umschliesst, wobei eine Sicherheitsvorrichtung vorgesehen ist, die den Schlitz teilweise deckt und die flexible Zugvorrichtung daran hinder ausser Eingriff mit den Scheiben zu kommen und den Stropps es ermöglicht den Block zu passieren, sowie eine Aufhängeeinrichtung (15) für das Blockgehäuse, dadurch gekennzeichnet, dass die Aufhängeeinrichtung (15) teils drehbar gegenüber dem Blockgehäuse (11) um eine Achse (16) parallel zur Lagerung (14) der Scheiben (12) und teils um eine Achse (18) lotrecht zu den Lagerungen (14) und zur Längsrichtung des Blockgehäuses (11) ist, dass der Schlitz seitlich der Scheiben und nahe dem Umfangsbereich dieser vorgesehen ist, und dass die Sicherheitsvorrichtung aus einer Sperrvorrichtung (22) besteht, die um einen Lagerzapfen (30, 14, 38) drehbar ist, der in seiner Normalposition die flexible Zugvorrichtungen daran hindert das Blockgehäuse durch den Schlitz zu verlassen, und bei Abweichung aus der Normalposition durch Einwirkung des Stropps (21) eine freie Passage für diesen schafft.

2. Block nach Anspruch 1, dadurch gekennzeichnet, dass das Blockgehäuse (11) rohrförmig ist und sich der Schlitz (13) in Längsrichtung des Blockgehäuses erstreckt.

3. Block nach Anspruch 2, dadurch gekennzeichnet, dass der Schlitz (13) zumindestens längs eines Teiles seiner Länge abgewinkelt ist.

4. Block nach Anspruch 1, dadurch gekennzeichnet, dass die Sperrvorrichtung (22) aus einem unter dem Einfluss zumindestens einer Feder (23, 27, 32) stehendem Riegel (24, 36, 31) besteht.

## Revendications

1. Un moufle (10) pour une ligne de transport temporaire pour transférer, par exemple, des billes de bois, comportant un bâti (11) avec deux poulies (12) agencées à une distance l'une de l'autre, destiné à supporter et/ou à former une déviation angulaire d'un dispositif de traction flexible (20) tel qu'une courroie, une corde ou analogue pourvue d'estropes (21) ou analogue faisant relief sur le dispositif de traction, le bâti englobant le dispositif de traction flexible à l'exception d'une fente (13), un dispositif de sécurité couvrant partiellement la fente et évitant au dispositif de traction flexible de se dégager des poulies et permettant aux estropes de traverser le moufle, et un élément de suspension (15) pour le bâti, caractérisé en ce que l'élément de suspension (15) est susceptible de pivoter, d'une part, par rapport au bâti (11) autour d'un axe (16) parallèle aux pivots (14) des poulies (12) et, d'autre part, aved le bâti (11) autour d'un axe (18) perpendiculaire aux pivots (14) et à la direction longitudinale du bâti (11), en ce que la fente est agencée latéralement par rapport à la poulie et au voisinage immédiat de la zone du pourtour des poulies et en ce que le dispositif de sécurite est constitué par au moins un dispositif de verrouillage (22) susceptible de pivoter autour d'un pivot (30, 14, 38), qui dans sa position normale est agencé pour éviter que le dispositif de traction flexible ne quitte le bâti par la fente, et lorsqu'il est déplacé hors de cette position normale par engagement avec une estrope (21), fournit un passage libre pour l'estrope.

2. Un moufle selon la revendication 1, caractérisé en ce que le bâti (11) est conformé en forme de tube et la fente (13) s'étend dans la direction longitudinale de celui-ci.

3. Un moufle selon la revendication 2, caractérisé en ce que la fente (13) présente des bords inclinés sur au moins une partie de sa longueur.

4. Un moufle selon la revendication 1, caractérisé en ce que le dispositif de verrouillage (22) est constitué d'un verrou (24, 36, 31) qui est actionné par au moins un ressort (23, 27, 32).

# FIG.1

15

10

11

19

20

21

# FIG.2

# FIG.3

0 053 137

FIG.4

FIG.5

3

0 053 137

FIG.6

FIG.7

**FIG. 8**

**FIG. 9**

5